# EUROPÄISCHE PATENTSCHRIFT

(11) **EP 2 773 980 B1**
(45) Veröffentlichungstag und Bekanntmachung des Hinweises auf die Patenterteilung: **26.06.2019**
(21) Anmeldenummer: 12780746.9
(22) Anmeldetag: 02.11.2012
(51) Int. Cl.: G01S 17/66, G01B 11/00, G01C 15/00, G01B 5/004

(54) **LASERDIODE ALS INTERFEROMETER-LASERSTRAHLQUELLE IN EINEM LASERTRACKER**
LASER DIODE AS INTERFEROMETER LASERBEAM SOURCE IN A LASER TRACKER
DIODE LASER COMME SOURCE DE RAYONNEMENT LASER D'INTERFÉROMÈTRE DANS UN APPAREIL DE SUIVI LASER

(30) Priorität: 03.11.2011 EP 11187614
(43) Veröffentlichungstag der Anmeldung: 10.09.2014
(73) Patentinhaber: Leica Geosystems AG, 9435 Heerbrugg (CH)
(72) Erfinder: BÖCKEM, Burkhard, CH-5415 Rieden AG (CH); LÜTHI, Thomas, 5000 Aarau (CH)
(74) Vertreter: Kaminski Harmann
(86) Internationale Anmeldenummer: PCT/EP2012/071708
(87) Internationale Veröffentlichungsnummer: WO 2013/064625

(56) Entgegenhaltungen:
- EP-A1- 2 261 601
- EP-A2- 1 655 582
- DE-A1- 3 528 259
- DE-A1- 10 235 669
- JP-A- 2002 039 714
- US-A- 5 114 226
- US-A- 5 473 428

## Beschreibung

Die Erfindung betrifft einen Lasertracker, mit einem Interferometer mit Laserdiode zur Bestimmung einer Entfernungsänderung relativ zu einem Ziel nach dem Oberbegriff des Anspruchs 1, eine Verwendung einer Laserdiode mit grosser Kohärenzlänge in einem entsprechenden Interferometer nach Anspruch 12 und ein Verfahren zum Bestimmen einer relativen Entfernung zum Ziel nach Anspruch 13. Messvorrichtungen, die für eine fortlaufende Verfolgung eines Zielpunkts und eine koordinative Positionsbestimmung dieses Punkts ausgebildet sind, können allgemein unter dem Begriff Lasertracker zusammengefasst werden. Ein Zielpunkt kann dabei durch eine retro-reflektierende Einheit (z.B. Würfelprisma) repräsentiert sein, die mit einem optischen Messstrahl der Messvorrichtung, insbesondere einem Laserstrahl, angezielt wird. Der Laserstrahl wird parallel zurück zur Messvorrichtung reflektiert, wobei der reflektierte Strahl mit einer Erfassungseinheit der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von der Messvorrichtung zum Zielpunkt, z.B. mittels Laufzeit-oder Phasendifferenzmessung oder mittels des Fizeau-Prinzips, und - in modernen Systemen zunehmend standardisiert - auf einem Sensor eine Ablage des empfangenen Strahls von einer Nullposition ermittelt. Mittels dieser so messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Sensor verringert wird, insbesondere "Null" ist, und damit der Strahl in Richtung des Reflektorzentrums ausgerichtet ist. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Messgerät bestimmt werden. Das Nachführen kann dabei mittels einer Ausrichtungsänderung des motorisiert bewegbaren, zur Ablenkung des Laserstrahls vorgesehenen Ablenkspiegels und/oder durch ein Schwenken der Anzieleinheit, die die strahlführende Laseroptik aufweist, realisiert werden.

Lasertracker nach dem Stand der Technik können zusätzlich mit einer optischen Bilderfassungseinheit mit einem zweidimensionalen, lichtempfindlichen Array, z.B. einer CCD- oder CID-Kamera oder einer auf einem CMOS-Array basierenden Kamera, oder mit einem Pixelarraysensor und mit einer Bildverarbeitungseinheit ausgeführt sein. Der Lasertracker und die Kamera sind dabei insbesondere derart aufeinander montiert, dass ihre Positionen relativ zueinander nicht veränderbar sind. Die Kamera ist beispielsweise zusammen mit dem Lasertracker um dessen im Wesentlichen senkrechte Achse drehbar, jedoch unabhängig vom Lasertracker auf und ab schwenkbar und somit insbesondere von der Optik des Laserstrahls getrennt angeordnet. Insbesondere kann die Kamera über eine Fischaugen-Optik verfügen und somit ein Schwenken der Kamera aufgrund eines sehr grossen Bilderfassungsbereichs der Kamera vermieden oder zumindest eingeschränkt nötig sein. Weiters kann die Kamera - z.B. in Abhängigkeit der jeweiligen Anwendung - nur um eine Achse schwenkbar ausgeführt sein. In alternativen Ausführungen kann die Kamera in integrierter Bauweise mit der Laseroptik zusammen in einem gemeinsamen Gehäuse verbaut sein.

Mit dem Erfassen und Auswerten eines Bildes - mittels Bilderfassungs- und Bildverarbeitungseinheit - eines so genannten Messhilfsinstruments mit Markierungen, deren relative Lage zueinander bekannt ist, kann so auf eine Orientierung eines an dem Messhilfsinstrument angeordneten Objekts (z.B. eine Sonde) im Raum geschlossen werden. Zusammen mit der bestimmten räumlichen Position des Zielpunkts kann ferner die Position und Orientierung des Objekts im Raum absolut und/oder relativ zum Lasertracker präzise bestimmt werden.

Das Objekt, dessen Position und Orientierung mit dem genannten Messgerät vermessen wird, muss damit beispielsweise nicht eine Messsonde selbst sondern kann das Messhilfsinstrument sein. Dieses wird als Teil des Messsystems für die Vermessung in eine relativ zum Zielobjekt mechanisch definierte oder während der Vermessung bestimmbare Position gebracht, wobei über dessen vermessene Position und Orientierung auf die Position und gegebenenfalls die Orientierung beispielsweise der Messsonde geschlossen werden kann.

Derartige Messhilfsinstrumente können durch so genannte Tastwerkzeuge, die mit ihrem Kontaktpunkt auf einem Punkt des Zielobjektes positioniert werden, verkörpert sein. Das Tastwerkzeug weist Markierungen, z.B. Lichtpunkte, und einen Reflektor auf, der einen Zielpunkt am Tastwerkzeug repräsentiert und mit dem Laserstrahl des Trackers anzielbar ist, wobei die Positionen der Markierungen und des Reflektors relativ zum Kontaktpunkt des Tastwerkzeuges präzise bekannt sind. Das Messhilfsinstrument kann in dem Fachmann bekannter Weise auch ein beispielsweise von Hand gehaltener, zur Distanzmessung ausgerüsteter Scanner für berührungslose Oberflächenvermessungen sein, wobei Richtung und Position des für die Distanzmessung verwendeten Scanner-Messstrahles relativ zu den Lichtpunkten und Reflektoren, die auf dem Scanner angeordnet sind, genau bekannt sind. Ein derartiger Scanner ist beispielsweise in der EP 0 553 266 beschrieben.

Zur Entfernungsmessung weisen Lasertracker des Standes der Technik zumindest einen Distanzmesser auf, wobei dieser z.B. als Interferometer ausgebildet sein kann. Da solche Entfernungsmesseinheiten nur relative Distanzänderungen messen können, werden in heutigen Lasertrackern zusätzlich zu Interferometern so genannte Absolutdistanzmesser verbaut. Beispielsweise ist eine derartige Kombination von Messmitteln zur Entfernungsbestimmung durch das Produkt LTD500 der Leica Geosystems AG bekannt.

Die in diesem Zusammenhang für die Distanzmessung eingesetzten Interferometer verwenden hauptsächlich - aufgrund der grossen Kohärenzlänge und der damit ermöglichten Messreichweite - als Lichtquellen HeNe-Gaslaser. Die Kohärenzlänge des HeNe-Lasers kann dabei einige hundert Meter betragen, so dass mit relativ einfachen Interferometer-Aufbauten die in der industriellen Messtechnik geforderten Reichweiten erzielt werden können. Eine Kombination eines Absolutdistanzmessers und eines Interferometers zur Entfernungsbestimmung mit einem HeNe-Laser ist beispielsweise aus der WO 2007/079600 A1 bekannt. Nachteilig an der Verwendung von HeNe-Laserlichtquellen ist im Hinblick auf eine allgemein angestrebte Miniaturisierung von Lasertrackern jedoch deren die Lichtleistung bestimmende Grösse. Die Leistung der Lichtquelle hängt dabei signifikant von der Länge der Laserröhre ab, d.h. je länger die Röhre desto grösser die erreichbare Emissionsleistung. Zudem zeigt eine derartige Laserquelle gewöhnlich eine relativ grosse Leistungsdissipation. Einen weiteren Nachteil stellt die für den Betrieb benötigte Hochspannungsversorgung dar. Beispielsweise muss für die Zündung des Lasers eine Spannung von ca. 7'000V und während des Betriebs eine Spannung von ca. 1'500V bereitgestellt werden, wodurch bei der Verwendung solcher Lichtquellen spezielle Komponenten (z.B. Hochspannungsnetzteil und Abschirmung) eingesetzt und Sicherheitsmassnahmen getroffen werden müssen. Auch die Empfindlichkeit gegenüber Magnetfeldern (z.B. erzeugt durch interne Motoren oder externe Schweisstrafos) und die begrenzte Lebensdauer der Röhren (typischerweise ca. 15'000 Betriebsstunden) gestalten den Einsatz von HeNe-Lasern nachteilig - beispielsweise da die Lichtquellen oft kostspielig in den Systemen ersetzt werden müssen.

Es ist eine Aufgabe der vorliegenden Erfindung, einen verbesserten Lasertracker bereitzustellen, wobei die Mittel zur Erzeugung einer Laserstrahlung zur Entfernungsmessung in ihrer Gesamtheit kompakter ausgebildet sind und eine zur Entfernungsbestimmung emittierte Laserstrahlung dabei derart erzeugbar ist, dass eine geforderte Präzision für die Entfernungsbestimmung bei im Rahmen einer industriellen Vermessung geforderter grosser Messreichweite, insbesondere bei einer Mindestreichweite 10m, mindestens erreicht wird. Eine spezielle Aufgabe der Erfindung ist es einen Lasertracker mit einer hinsichtlich des Platzbedarfs verbesserten Entfernungsmesseinheit bereitzustellen, wobei eine geforderte Präzision bei einer gleichzeitig geforderten Messreichweite von mindestens 10m für die Entfernungsbestimmung mindestens erhalten bleibt.

Eine weitere spezielle Aufgabe der Erfindung ist es, einen Lasertracker mit einem Interferometer als Distanzmesser bereitzustellen, wobei die optischen Komponenten, insbesondere die Strahlquelle und dafür vorzusehende Versorgungseinheiten, gegenüber dem Stand der Technik einen deutlich geringeren Platzbedarf und geringeren Energieverbrauch aufweisen.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft einen Lasertracker zur fortlaufenden Verfolgung eines reflektierenden Ziels und zur Entfernungsbestimmung zu dem Ziel mit einer eine Stehachse definierenden Basis und einer Strahllenkeinheit zur Emission einer Messstrahlung und zum Empfang von zumindest einem Teil der am Ziel reflektierten Messstrahlung, wobei die Strahllenkeinheit um die Stehachse und eine im Wesentlichen orthogonal zur Stehachse stehende Neigungsachse relativ zur Basis motorisiert schwenkbar ist. Hierbei sind die Stehachse und die Neigungsachse derart zueinander positioniert, dass zwischen den Achsen ein Winkel von genau 90° bzw. von ungefähr 90°, z.B. 88,5°, vorliegt, wobei eine relative Achsstellung exakt definiert und korrespondierende Stellungswerte im Lasertracker hinterlegt sein können, insbesondere für eine Kompensation von Messwerten. Zudem verfügt der Lasertracker über eine als Interferometer ausgebildete Entfernungsmesseinheit, insbesondere mit einer definierten Detektorbandbreite, z.B. von 50MHz, zur Bestimmung einer Entfernungsänderung zum Ziel mittels Interferometrie, eine Interferometer-Laserstrahlquelle zur Erzeugung der Messstrahlung für das Interferometer und eine Winkelmessfunktionalität zur Bestimmung einer Ausrichtung der Strahllenkeinheit relativ zur Basis. Die Interferometer-Laserstrahlquelle ist dabei als Laserdiode ausgebildet, wobei die Laserdiode ferner derart ausgebildet ist, dass die Messstrahlung longitudinal monomodig mit einer definierten Emissionswellenlänge und mit einer Kohärenzlänge von mindestens 10m erzeugbar ist, insbesondere wobei die Kohärenzlänge von mindestens 10m mittels des Interferometers bestimmbar ist. Insbesondere kann die Laserdiode dabei derart ausgebildet sein, dass die Messstrahlung mit einer Kohärenzlänge von mindestens 20m, insbesondere mindestens 50m, erzeugbar ist.

Die Laserdiode weist eine derart angeordnete wellenlängenselektive Komponente auf, dass die Messstrahlung longitudinal monomodig mit der definierten Emissionswellenlänge und mit der Kohärenzlänge von mindestens 10m erzeugbar ist.

Die erfindungsgemässe Verwendung einer spezifischen Laserdiode mit dem Interferometer des Lasertrackers bietet Vorteile hinsichtlich des damit verbunden Platzbedarfs, der gegenüber einem HeNe-Gaslaser deutlich geringer ausfällt bei jedoch ebenfalls grosser Kohärenzlänge. Im Gegensatz zu einer solchen Gaslaserquelle, die zwar ebenfalls Messstrahlung mit geeigneter Kohärenzlänge bereitstellen kann, wird für den Betrieb der Diode zudem keine Hochspannungsversorgung benötigt. Des Weiteren weisen derartige Laserdioden einen geringeren Energieverbrauch auf.

Gemäss einer spezifischen, erfindungsgemässen Ausführungsform des Lasertrackers weist die Laserdiode eine erste Resonatoreinheit auf, die ein Anzahl von durch die Laserdiode erzeugbaren und gemeinsam entstehenden Lasermoden definiert, wobei durch jede Lasermode eine jeweils unterschiedliche Modenwellenlänge festgelegt ist und eine Diodenstrahlung mit den unterschiedlichen Modenwellenlängen erzeugbar ist. Die wellenlängenselektive Komponente ist dabei ferner derart ausgebildet, dass diese Komponente als eine zweite Resonatoreinheit wirkt und durch ein Zusammenwirken der wellenlängenselektiven Komponente mit der Laserdiode aus der Anzahl der Lasermoden eine Hauptlasermode extrahierbar ist. Dadurch ist die Diodenstrahlung als nur die Hauptlasermode aufweisende longitudinal monomodige Messstrahlung emittierbar, sodass die Emissionswellenlänge und die Kohärenzlänge der Messstrahlung definiert sind, insbesondere wobei die wellenlängenselektive Komponente als optisches Gitter ausgebildet ist.

Für die erfindungsgemässe Verwendung mit einem Interferometer ist eine grosse Kohärenzlänge der mit der Diode emittierbaren Laserstrahlung von einigen zehn Metern erforderlich. Zur Bereitstellung solcher Kohärenzen können die Laserdioden bzw. Diodenlaser, welche erfindungsgemäss in diesem Zusammenhang eingesetzt werden eine wellenlängenselektive Vorrichtung aufweisen. Als Strahlquellen können z.B.
- Distributed Feedback Laser (DFB) (mit einem periodisch strukturierten aktiven Medium, z.B. Gitter),
- Distributed Bragg Reflector Laser (DBR) (mit einem optischen Gitter ausserhalb des aktiven Mediums aber auf einem gemeinsamen Chip angeordnet),
- Fiber Bragg grating laser (FBG) (im Wesentlichen gemäss einem DFB-Laser, jedoch mit einem Gitter in einer externen Faser),
- External Cavity Diode Laser (ECDL) (Stabilisierung der Laserdiode mittels einer externen hochstabilen Kavität z.B. mit einem holografischen Gitter),
- Diode pumped solid state lasers (DPSS),
- Discrete mode lasers (DMD) und/oder
- Microchip Laser
eingesetzt werden. Die Strahlquellen sind dabei derart ausgebildet, dass der emittierte Laserstrahl hinsichtlich der Wellenlänge singlemodig mit einer Kohärenzlänge in der Grössenordnung von mehreren 10m (bzw. einer Linienbreite <1MHz) ist. Damit kann im Rahmen der Erfindung zur Erzeugung der monomodigen Messstrahlung eine wellenlängenselektive Komponente vorgesehen sein, insbesondere ein optisches Gitter.

Hinsichtlich der mit der Diode emittierten Wellenlänge sind Emissionsspektralbereiche vorteilhaft, welche im sichtbaren optischen Bereich, insbesondere im "roten Wellenlängenbereich", oder im nahen Infrarotbereich liegen. Somit kann die Emissionswellenlänge der Messstrahlung erfindungsgemäss zwischen 600nm und 700nm, insbesondere zwischen 630nm und 635nm, oder zwischen 850nm und 900nm, insbesondere zwischen 850nm und 855nm oder zwischen 892nm und 896nm, liegen. In einer Ausführung mit einer Emissionswellenlänge im sichtbaren Wellenlängenbereich (z.B. zwischen 630 und 635nm) kann das emittierte rote Laserlicht der Diode nicht nur für interferometrische Messungen sondern auch als Markierungslicht verwendet werden. Mit der Erzeugung eines roten Spots auf einem Zielobjekt kann beispielsweise einem Benutzer des Lasertrackers ein Anzielpunkt visuell sichtbar gemacht werden.

Eine Ansteuerung der Laserdiode bildet einen weiteren Aspekt der Erfindung. In diesem Zusammenhang kann der Lasertracker erfindungsgemäss eine Steuerungseinheit aufweisen und die Laserdiode derart ausgebildet sein, dass die Emissionswellenlänge der Messstrahlung innerhalb eines bestimmten Emissionswellenlängenbereichs longitudinal monomodig variierbar ist. Dabei kann die Emissionswellenlänge durch eine Temperaturänderung der Laserdiode und/oder eine Änderung eines an der Laserdiode anliegenden elektrischen Stroms gesteuert durch die Steuerungseinheit variierbar sein. Ferner kann vermittels der Steuerungseinheit die Laserdiode derart ansteuerbar sein, dass eine Emissionsleistung der Messstrahlung variierbar ist.

Durch diese Variationsmöglichkeit der Wellenlänge innerhalb eines bestimmten Bereichs, wobei die emittierte Strahlung einmodig vorliegt, d.h. im Wesentlichen mit einer bestimmten, scharf definierten Wellenlänge (geringe Linienbreite), kann ein durchstimmbarer und insbesondere modehop-freier Wellenlängenbereich für die Emissionswellenlänge bereitgestellt werden. Mittels dieses spezifischen Bereichs kann ausserdem eine Abstimmung der Strahlung auf eine durch eine Wellenlängenstabilisierungseinheit definierte Absorptionslinie erfolgen.

Erfindungsgemäss kann der Lasertracker hierzu eine Wellenlängenstabilisierungseinheit zur Stabilisierung der von der Laserdiode erzeugten Messstrahlung aufweisen, sodass die Emissionswellenlänge fortlaufend innerhalb eines definierten Wellenlängenbereichs vorliegt, insbesondere wobei die Wellenlängenstabilisierungseinheit als Absorptionszelle ausgebildet ist. Eine solche Stabilisierung kann für die Verwendung der Laserdiode als Lichtquelle für das Interferometer vorteilhaft bzw. in Abhängigkeit der Strahlqualität der Quelle notwendig sein. Z.B. kann die Wellenlängenstabilisierungseinheit als externe Gaszelle mit definierter Absorptionslinie (Absorptionszelle) ausgebildet sein (z.B. Iodzelle für 633nm) .

Ferner kann der Lasertracker erfindungsgemäss eine optische Verbindungsfaser zur Verbindung der Wellenlängenstabilisierungseinheit mit der Interferometer-Laserstrahlquelle aufweisen. So kann die mit der Laserstrahlquelle erzeugte Strahlung mittels der Verbindungsfaser zur Wellenlängenstabilisierungseinheit geführt und in diese eingekoppelt werden.

Hinsichtlich der Führung der Messstrahlung ausgehend von der erzeugenden Strahlquelle bis hin zur Strahllenkeinheit und einer anschliessende erfolgenden Aussendung kann erfindungsgemäss der Lasertracker allgemein zumindest eine optische Faser aufweisen, wobei die Messstrahlung vermittels der optischen Faser führbar ist, insbesondere zum Interferometer führbar ist, insbesondere wobei die durch die Laserdiode erzeugbare Messstrahlung in die optische Faser eingekoppelt wird. Zudem kann damit die Messstrahlung mittels der optischen Faser in die Strahllenkeinheit einkoppelbar sein.

Mittels der Strahlführung durch eine optische Faser können beispielsweise optische Komponenten wie die Wellenlängenstabilisierungseinheit oder Strahlquelle in unterschiedlichen Teilen des Lasertrackers angeordnet sein. So kann die Strahlquelle beispielsweise in der Basis oder einer Stütze des Trackers und die Stabilisierungseinheit in einer Anzieleinheit (oder umgekehrt) integriert sein. Dadurch kann die Flexibilität hinsichtlich des strukturellen Aufbaus des Trackers erhöht werden.

Den Aufbau des Trackers weiters betreffend kann der Lasertracker erfindungsgemäss eine um die Stehachse relativ zur Basis schwenkbare Stütze aufweisen und die Strahllenkeinheit als um die Neigungsachse relativ zur Stütze schwenkbare Anzieleinheit ausgebildet sein. In einer solchen Ausführungsform kann der Laserstrahl durch ein im Wesentlichen horizontales (azimutales) Schwenken der Stütze relativ zur Basis und ein im Wesentlichen vertikales (elevatives) Schwenken der Anzieleinheit relativ zur Stütze ausgerichtet werden. Zudem kann eine Führung des Messstrahls entsprechend einer Positionsänderung des reflektierenden Ziels (z.B. Retroreflektor an einem Tastwerkzeug) mittels eines derartigen, durch Stellmotoren bereitgestellten Schwenkens erfolgen.

Erfindungsgemäss kann die Laserdiode dabei in der Anzieleinheit angeordnet sein, wobei die damit verbundene Platzersparnis (gegenüber der bisherigen Verwendung von Gaslaser-Strahlquellen) einen deutlichen Vorteil hinsichtlich der konstruktiven Konzeption des Lasertrackers darstellen kann.

Ein weiterer Aspekt der Erfindung betrifft die Bestimmung einer präzisen Entfernung zu einem Ziel. Der Lasertracker kann hierzu zusätzlich eine Absolutdistanzmesseinheit zur Bestimmung einer Distanz zum Ziel aufweisen, insbesondere nach dem Prinzip der Laufzeitmessung und/oder nach dem Phasenmessprinzip und/oder nach dem Fizeau-Prinzip. Ausserdem kann eine Präzisionsentfernung zum Ziel in Abhängigkeit der mittels der Absolutdistanzmesseinheit bestimmten Distanz und der mittels der Entfernungsmesseinheit bestimmten Entfernungsänderung bestimmbar sein. Durch die Berücksichtigung von Messungen von sowohl dem Interferometer als auch dem Entfernungsmesser (Absolutdistanzmesser) kann die präzise Entfernung zum Ziel bestimmt und fortlaufend aktualisiert werden. Das Interferometer stellt hierbei hochgenaue Entfernungsmesswerte zur Verfügung. Die beiden Distanzmessvorrichtungen können jeweils eine Strahlquelle insbesondere mit unterschiedlichen Emissionswellenlängen (z.B. in Abhängigkeit des jeweils verbauten Detektors) aufweisen.

Die Erfindung betrifft ferner die Verwendung einer Laserdiode, die zur Erzeugung einer longitudinal monomodigen Messstrahlung mit einer definierten Emissionswellenlänge und einer Kohärenzlänge von mindestens 10m, insbesondere mindestens 20m bzw. 50m, ausgebildet ist, in einer als Interferometer ausgebildeten Entfernungsmesseinheit eines Lasertrackers zur Bestimmung einer Entfernungsänderung zu einem Ziel durch Interferometrie mittels der durch die Laserdiode erzeugbaren Messstrahlung.

Die Laserdiode bzw. Interferometer-Strahlquelle und die weiteren strahlbeeinflussenden Komponenten (z.B. Wellenlängenstabilisierungseinheit) können im Rahmen der Erfindung in unterschiedlichen Ausführungsformen vorliegen. So kann beispielsweise sichtbar rote (z.B. nahe 633nm), wellenlängenstabilisierte Laserstrahlung erzeugt werden, wobei eine hohe Kompatibilität zu bereits verfügbaren Systemkomponenten (z.B. Retroreflektoren) erreichbar ist und zudem kein zusätzlicher sichtbarer Pointer notwendig wird. Die Lichtquelle und Absorptionszelle (zur Stabilisierung der Wellenlänge) können räumlich getrennt sein, z.B. die Lichtquelle im Teleskop des Trackers und über eine Faser mit der Absorptionszelle in der Stütze verbunden.

In einer weiteren Ausführung kann die Laserdiode zur Emission von sichtbar, nicht-wellenlängenstabilisierter Strahlung ausgebildet sein. Beispielsweise für die Strahlungsversorgung in einem Referenzinterferometer (zusammen mit einem Absolutdistanzmesser) kann eine solche nicht-stabilisierte Laserstrahlung eingesetzt werden. Insbesondere ist dabei die genaue Kenntnis der vorliegenden Wellenlänge nicht erforderlich (diese kann in einer Messung genügend genau bestimmt werden). Da diese nur für die wenigen Millisekunden einer Absolutdistanzmessung konstant sein muss, stellen somit Langzeitdrifts der Wellenlänge kein Problem dar, und eine reine Wellenlängenstabilisierung über Strom- und Temperaturstabilisierung der Lichtquelle ist ausreichend.

Zusätzlich können mit dem Referenzinterferometer in der Zeit zwischen zwei Messungen des Absolutdistanzmessers (z.B. mit einer Messrate von 50 Hz) Messungen mit einer höheren Messrate (z.B. 1000 Hz) durchgeführt werden, wobei die aktuelle Interferometerwellenlänge fortlaufend, z.B. bei jeder Absolutdistanzmessung, bestimmt und dazwischen interpoliert wird.

Diese Ausführung kann hinsichtlich des Platzbedarfs für eine in diesem Zusammenhang einsetzbare sehr kompakte Interferometerlichtquelle vorteilhaft sein. Darüber hinaus könnte daher als Subvariante eine nicht sichtbare Wellenlänge verwendet werden, wobei dann ein zusätzlicher sichtbarer Pointer vorgesehen ist.

Eine weitere Ausführungsform betrifft eine derartige Ausgestaltung des Lasertrackers hinsichtlich der Messstrahlung, dass diese Strahlung eine für eine Miniatur-Absorptionszelle (z.B. Rb, Cs: 780nm, 795nm, 852nm, 894nm) optimierte Wellenlänge aufweist und wellenlängenstabilisiert ist. Damit kann ein deutlich geringerer Platzbedarf (gegenüber rotem Wellenlängenbereich) der optischen Bauteile erzielt werden.

Ausserdem kann im Rahmen einer weiteren Ausführungsform die Strahlung eine Wellenlänge im Telecom-Bereich oder eine beliebige Wellenlänge mit einigen Metern Kohärenzlänge aufweisen und wellenlängenstabilisiert sein. Diese Ausführung bietet insbesondere Platzbedarfsvorteile gegenüber Strahlquellen und damit einsetzbaren Stabilisierungseinheiten, die im roten Wellenlängenbereich emittieren.

Weiterhin betrifft die Erfindung ein Verfahren zum Bestimmen einer Entfernungsänderung zu einem Ziel mittels Interferometrie mit einem Lasertracker. Der Lasertracker weist dabei eine eine Stehachse definierende Basis und eine Strahllenkeinheit zum Emittieren einer Messstrahlung und zum Empfangen von zumindest einem Teil der am Ziel reflektierten Messstrahlung auf, wobei die Strahllenkeinheit um die Stehachse und eine im Wesentlichen orthogonal zur Stehachse stehende Neigungsachse relativ zur Basis motorisiert schwenkbar ist. Ausserdem ist eine als Interferometer ausgebildeten Entfernungsmesseinheit zum Bestimmen einer Entfernungsänderung zum Ziel mittels Interferometrie und eine Interferometer-Laserstrahlquelle zum Erzeugen der Messstrahlung für das Interferometer vorgesehen. Weiters erfolgen ein Emittieren der Messstrahlung, ein Empfangen des zumindest einen Teils der am Ziel reflektierten Messstrahlung und das Bestimmen der relativen Entfernung. Dabei ist die Interferometer-Laserstrahlquelle als Laserdiode ausgebildet und zudem die Laserdiode derart ausgebildet, dass die Messstrahlung longitudinal monomodig mit einer definierten Emissionswellenlänge und einer Kohärenzlänge von mindestens 10m erzeugt wird. Insbesondere kann die Laserdiode derart ausgebildet sein, dass die Messstrahlung mit einer Kohärenzlänge von mindestens 20m, insbesondere mindestens 50m, erzeugt wird.

Im Rahmen des erfindungsgemässen Verfahrens kann ferner ein Stabilisieren der von der Laserdiode erzeugten Messstrahlung derart erfolgen, dass die Emissionswellenlänge fortlaufend innerhalb eines definierten Wellenlängenbereichs vorliegt.

Die erfindungsgemässe Vorrichtung und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: eine Anordnung optischer Bauteile zur Entfernungsbestimmung und einer Kamera in einem Lasertracker nach dem Stand der Technik;
- Fig.2: einen erfindungsgemässen Lasertracker mit einem Interferometer und einer Laserdiode zur Erzeugung einer Messstrahlung für das Interferometer;
- Fig.3: eine erste Ausführungsform einer erfindungsgemässen Anordnung von optischen Komponenten mit einer Laserdiode als Strahlquelle für ein Interferometer in einem Lasertracker;
- Fig.4: eine weitere Ausführungsform einer erfindungsgemässen Messoptik eines Lasertrackers mit einer Laserdiode als Strahlquelle für ein Interferometer und einem Lichtleiter;
- Fig.5: einen erfindungsgemässen Aufbau einer Interferometeranordnung mit Laserdiode für einen Lasertracker;
- Fig.6: eine weitere Ausführungsform einer erfindungsgemässen Messoptik eines Lasertrackers mit einer Laserdiode mit Wellenlängenstabilisierungseinheit zur Erzeugung einer Messstrahlung für ein Interferometer;
- Fig.7: eine weitere Ausführungsform einer erfindungsgemässen Messoptik eines Lasertrackers mit einer Laserdiode, einer Wellenlängenstabilisierungseinheit und Lichtleitern; und
- Fig.8: eine schematische Darstellung zur Erzeugung der Messstrahlung mit einer in einem erfindungsgemässen Lasertracker vorgesehenen Laserdiode mit wellenlängenselektiver Komponente.

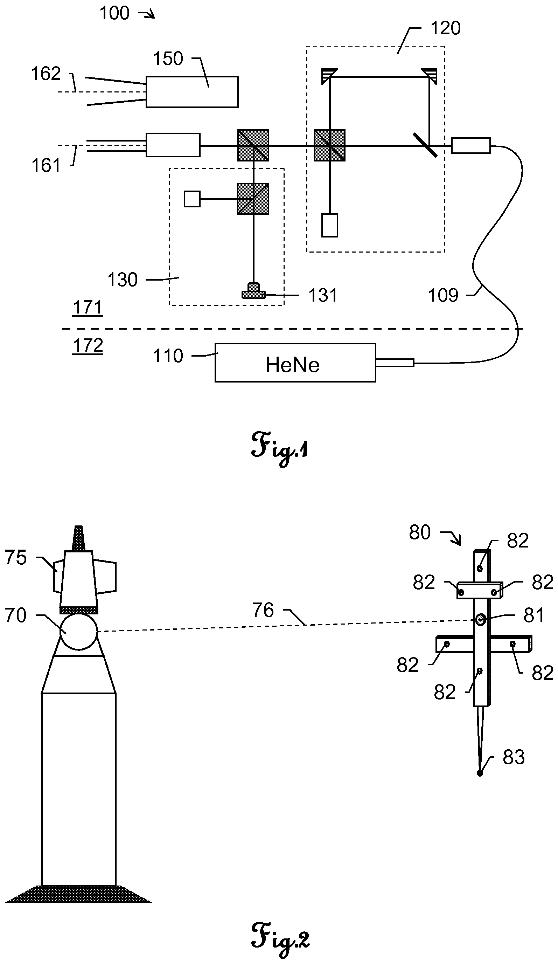

Figur 1 zeigt ein optisches System 100 aus Bauteilen zur Entfernungsbestimmung mit einer Kamera 150 in einem Lasertracker nach dem Stand der Technik und eine separierte HeNe-Laserlichtquelle 110.

Ein Absolutdistanzmesser 130 mit einer Laserdiode 131 und ein Interferometer 120 sind zusammen mit der Kamera 150, insbesondere einer Zoomkamera, derart platziert, dass sie bei einer Bewegung des Systems 100, beispielsweise bei einer Schwenkung des gesamten, das System 100 tragenden Aufbaus 171, gleichzeitig bewegt werden uns sich deren Orientierung somit gemeinsam ändert. Dabei weist die Kamera 150 eine eigene Optik mit optischer Achse 162 auf, welche im Wesentlichen parallel zu einer dem Absolutdistanzmesser 130 und der Interferometeranordnung 120 gemeinsamen optischen Achse 161 verläuft.

Der HeNe-Laser 110 hingegen ist an einer Basiseinheit 172, z.B. einer Stütze oder feststehenden Basis, getrennt verbaut und wir nicht mit dem Aufbau 171 mit bewegt, sondern stellt dem System 100, insbesondere dem Interferometer 120, vermittels eines Lichtleiters 109 eine erzeugte Messstrahlung zur Verfügung.

Mittels des Absolutdistanzmessers 130 kann eine Entfernung zu einem Ziel bestimmt werden, wobei eine präzise Entfernung zum Ziel und eine Entfernungsänderung fortlaufend durch eine Berücksichtigung von Messungen des Interferometers 120 bestimmt werden können.

Figur 2 zeigt einen erfindungsgemässen Lasertracker 70 mit einer Bilderfassungseinheit 75 und einem Messhilfsinstrument 80, z.B. einem Tastwerkzeug. Die Bilderfassungseinheit 75 weist zum Zweck einer Positionsbestimmung einer Sensorbelichtung auf dem Sensor bzw. in einem erfassten Bild einen CMOS auf oder ist insbesondere als CCD- oder Pixelsensorarray-Kamera ausgebildet. Derartige Sensoren erlauben eine positionssensitive Detektion von erfasster Belichtung. Weiters weist das Messhilfsinstrument 80 einen Sensor auf, dessen Kontaktpunkt 83 mit einem zu vermessenden Zielobjekt in Kontakt gebracht werden kann. Während dieser Kontakt zwischen dem Tastwerkzeug 80 und dem Zielobjekt besteht können eine Position des Kontaktpunktes 83 im Raum und damit die Koordinaten eines Punkts am Zielobjekt exakt bestimmt werden. Dieses Bestimmen erfolgt vermittels einer definierten relativen Positionierung des Kontaktpunkts 83 zum Reflektor 81 und zu den am Messhilfsinstrument 80 angeordneten Markierungen 82, die beispielsweise als Leuchtdioden ausgebildet sein können. Alternativ können die Markierungen 82 auch derart ausgebildet sein, dass diese bei einem Beleuchten, z.B. mit Strahlung einer definierten Wellenlänge, die auftreffende Strahlung reflektieren (als Retro-Reflektoren ausgebildete Hilfspunkt-Markierungen 82), insbesondere eine bestimmte Leuchtcharakteristik zeigen, oder dass diese ein definiertes Muster oder Farbkodierung aufweisen. Aus der Lage bzw. Verteilung der Markierungen 82 in einem mit dem Sensor der Bilderfassungseinheit 75 erfassten Bild kann eine Orientierung des Tastwerkzeugs 80 bestimmt werden.

Zur Bestimmung der Position wird ein Messlaserstrahl 76 in Richtung des auf dem Messhilfsinstrument 80 angeordneten Reflektors 81 vom Lasertracker 70 emittiert, von dort zum Tracker 70 parallel zurück reflektiert und mittels einer Empfangseinheit am Tracker 70 erfasst. Der Lasertracker 70 verfügt über Distanzmessmittel zur Bestimmung einer Entfernung zwischen dem Tracker 70 und dem Reflektor 81 und über Winkelmesser, die eine Stellung einer Strahllenkeinheit, mittels derer der Laserstrahl 76 definiert ausgerichtet und geführt werden kann, und somit eine Ausbreitungsrichtung des Laserstrahls 76 bestimmbar machen. Die Ausrichtung des Laserstrahls 76 kann insbesondere durch ein Schwenken der Strahllenkeinheit, insbesondere einer Anzieleinheit, in der eine strahlführende Optik und insbesondere mindestens eine Strahlquellen verbaut sein kann, oder einem Spiegel, erfolgen.

Zur Entfernungsbestimmung vom Lasertracker 70 zum Reflektor 81 sind ein Absolutdistanzmesser und insbesondere zur Bestimmung von Entfernungsänderungen zwischen Tracker 70 und Reflektor 81 ein Interferometer in den Tracker 70 integriert. Der Absolutdistanzmesser weist eine erste Laserdiode zur Erzeugung einer Messstrahlung auf und ermöglicht damit ein Bestimmen einer Distanz zum Ziel bzw. Reflektor 81 z.B. mittels Laufzeitmessung, nach dem Phasenmessprinzip oder dem Fizeau-Prinzip. Dem Interferometer wird erfindungsgemäss eine weitere Messstrahlung von einer zweiten Laserdiode bereitgestellt. Dabei kann diese Messstrahlung derart an der Laserdiode emittiert werden, dass die Strahlung direkt in das Interferometer eintritt oder kann mittels eines optischen Lichtleiters zum Interferometer geführt und in dieses eingekoppelt werden. Die zweite Laserdiode ist hierbei so ausgestaltet, dass die damit erzeugbare Messstrahlung einmodig (single-mode) ist und eine grosse Kohärenzlänge, insbesondere von mindestens 10m, vorzugsweise von 50m, aufweist. Für eine präzise Entfernungsbestimmung können Messungen von beiden Distanzmessmitteln gemeinsam herangezogen und verknüpft werden.

Vorteile für die derartige Verwendung einer Laserdiode mit grosser Kohärenzlänge für ein Interferometer in einem Lasertracker 70 liegen z.B. im Platzbedarf für die Laserdiode (der wesentlich geringer ist als derjenige für einen HeNe-Gaslaser, welcher eine alternative Strahlquelle dafür darstellt), im relativ geringen Energieverbrauch, in der schnell herstellbaren Messstrahlemission der Diode nach Aktivierung des Systems und in der Möglichkeit auf eine Hochspannungsversorgung (z.B. benötigt für einen HeNe-Gaslaser) verzichten zu können.

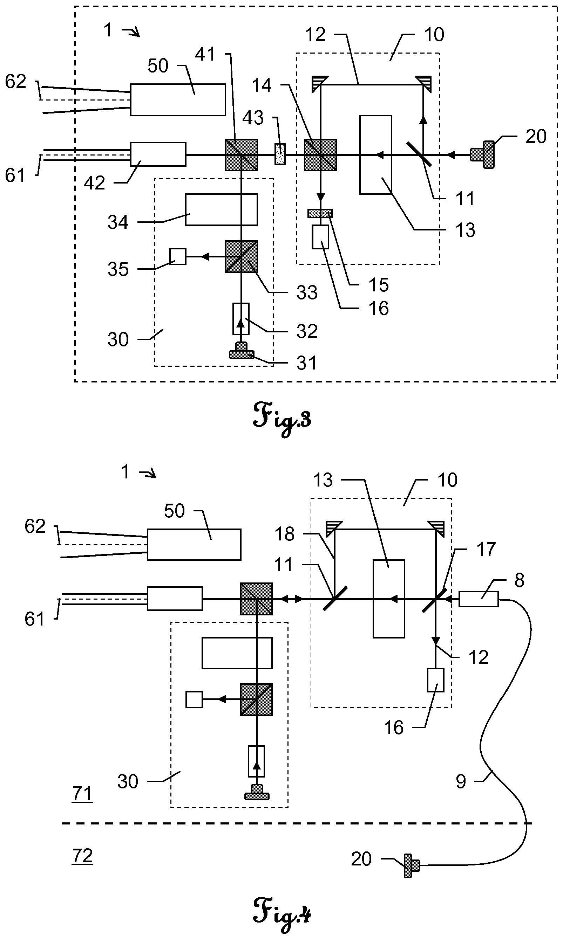

Figur 3 zeigt eine erfindungsgemässe Anordnung von optischen Komponenten mit einer Laserdiode 20 als Strahlquelle für ein Interferometer 10 eines optischen Systems 1 in einem Lasertracker. Ausserdem weist das System 1 einen Absolutdistanzmesser 30 (ADM) mit einer weiteren Strahlquelle 31, z.B. einer Laserdiode oder einer SLED (Superluminescent LED), und eine Kamera 50 auf.

Der von der Strahlquelle 31 des Absolutdistanzmessers 30 ausgehende Lichtstrahl wird durch einen Isolator 32 zur Abschirmung von rückkehrendem Licht auf einen polarisierenden Strahlteiler 33 und von dort durch einen elektrooptischen Modulator 34 zu einem wellenlängenabhängigen Strahlteiler 41 geführt. Ein derartiger Strahlteiler 41 mit wellenlängenabhängiger Strahlteilung wird insbesondere bei unterschiedlichen Emissionswellenlängen der beiden Lichtquellen 20,31 eingesetzt. Das rückkehrende Licht wird im Absolutdistanzmesser 30 durch den polarisierenden Strahlteiler 33 auf einen ADM-Detektor 35 geführt. Insbesondere sind in diesem Zusammenhang auch andere ADM-Anordnungen und Verfahren verwendbar, bei denen sich der Messlichtstrahl durch beispielsweise den wellenlängenabhängigen Strahlteiler 41 ein- und auskoppeln lässt. Ein Beispiel für einen solchen Distanzmesser ist in der WO 03/062744 A1 geoffenbart. Grundsätzlich sind hier wie in den anderen Ausführungsformen der Erfindung auch andere Typen von ADM, wie z.B. Phasenmesser, einsetzbar.

Das Interferometer 10 verwendet erfindungsgemäss Licht, welches von der Laserdiode 20 erzeugt wird. In der gezeigten Ausführungsform ist diese Diode 20 direkt am System 1 angeordnet, wobei diese eine longitudinal monomodige Laserstrahlung mit grosser Kohärenzlänge (single frequency)erzeugt. Die so erzeugte Messstrahlung wird durch einen Strahlteiler 11 in einen Referenzlichtpfad 12 und einen Messlichtpfad aufgeteilt. Der Messlichtpfad führt durch einen akustooptischen Modulator 13 und trifft zusammen mit dem Referenzlichtpfad auf einen polarisierenden Strahlteiler 14. Der polarisierende Strahlteiler 14 leitet die Messstrahlung weiter zum wellenlängenabhängigen Strahlteiler 41, und lenkt das rückkehrende Messlicht zusammen mit dem Referenzlicht über ein Polarisationsfilter 15 zu einem Interferometer-Detektor 16. Die Wirkungsweise eines solchen Interferometers 10 ist grundsätzlich bekannt und basiert auf dem Welleninterferenzprinzip. Es sind insbesondere auch andere Interferometeranordnungen und Verfahren verwendbar, bei denen sich die Messstrahlung durch beispielsweise den wellenlängenabhängigen Strahlteiler 41 ein- und auskoppeln lässt. Ein Beispiel für ein solches Interferometer ist in der WO 03/062744 A1 beschrieben. Grundsätzlich sind in anderen Ausführungsformen der Erfindung auch andere Typen von Interferometern (z.B. Michelson mit Quadraturdetektion) einsetzbar.

Das optische System 1 weist weiter eine λ/4-Platte 43 und eine Komponente 42 auf, welche Licht, das entlang einer vom Absolutdistanzmesser 30 und dem Interferometer 10 gemeinsamen genutzten optischen Achse 61 von aussen in das System 1 einfallt, auftrennen und einen ersten Teil dieses Lichtes zu einer Übersichtskamera und einen zweiten zu einem Positionswandler ausgekoppelt. Die Übersichtskamera kann eine eigene Optik und zusätzlich einen Bildwandler aufweisen. Die Übersichtskamera weist dabei typischerweise einen Öffnungswinkel von rund 10° und eine Brennweite von beispielsweise 30 - 50mm auf und dient zur Groblokalisierung von Messzielen.

Zur Erfassung von reflektierenden Zielen kann das System zudem vorzugsweise eine Reflektorbeleuchtung mit einer bestimmten Beleuchtungswellenlänge aufweisen, welche einen Winkelbereich beleuchtet, der vorzugsweise mindestens so gross ist, wie der Öffnungswinkel der Übersichtskamera.

Eine Auswertungselektronik und/oder Auswertungssoftware der Übersichtskamera detektiert dann beispielsweise einen oder mehrere helle Lichtpunkte im Sichtbereich der Übersichtskamera, welche jeweils einem reflektierenden Ziel entsprechen. Daraus kann deren Position im Bild der Übersichtskamera und daraus wiederum eine Änderung der Ausrichtung des Ziels, z.B. eines Messhilfsinstruments (z.B. Taster oder Scanner), ermittelt werden, womit der Lasertracker bzw. das System 1 und die Lichtstrahlen des oder der Distanzmesser 10,30 auf das Ziel ausrichtbar sind. Damit sind somit eine automatische Zielerfassung und ein "Lock-on", d.h. eine fortlaufende Verfolgung des Ziels, der Distanzmesser 10,30 auf ein Ziel realisierbar.

Der Lichtanteil für den Positionswandler ist typischerweise ein Strahlenbündel von zurückkehrendem Licht, welches von einem der Distanzmesser 10,30, vorzugsweise von der Interferometeranordnung 10, ausgesendet wurde. Der Positionswandler kann eine eigene Optik und beispielsweise eine positionsempfindliche Diode aufweisen. Diese liefert Signale, welche die Position des Strahlenbündels in zwei Dimensionen auf einer Fläche der positionsempfindlichen Diode repräsentieren. Insbesondere können dazu auch Sensorarrays oder Bildwandler (z.B. CCD oder CMOS) mit einer zugeordneten digitalen Signalverarbeitung zur Positionsbestimmung verwendet werden. Eine Regeleinheit kann entsprechend der ermittelten Position eine Ausrichtung des Lasertrackers so regeln, dass der Messstrahl einer Bewegung des reflektierenden Ziels folgt.

Ausserdem kann die Kamera 50 Markierungen eines Ziels mit dem integrierten Bildwandler erfassen. Aufgrund der Abbildung der Markierungen wird z.B. mittels Bildverarbeitung die Orientierung des Ziels ermittelt, wobei zudem der Zoomfaktor der Kamera 50 so gesteuert werden kann, dass die Abbildung des Ziels auf den Bildwandler im Wesentlichen stets dieselbe Grösse aufweist. Hierfür kann die Kamera 50 beispielsweise einen 10-fach-Zoom mit einer Brennweite von 50 bis 500mm Vergrösserung aufweisen.

Figur 4 zeigt eine weitere Ausführungsform einer erfindungsgemässen Messoptik 1 eines Lasertrackers mit einer Laserdiode 20 als Strahlquelle für ein Interferometer 10 und einem Lichtleiter 9. Die Laserdiode 20 ist dabei wiederum zur Erzeugung der Messstrahlung für das Interferometer 10 des Lasertrackers vorgesehen. Zudem ist eine Zoomkamera 50 vorgesehen.

Die Laserdiode 20 ist hierbei derart ausgebildet, dass damit eine Messstrahlung mit einer hohen Kohärenzlänge, insbesondere einer Kohärenzlänge von mindestens 10m und einer Linienbreite von weniger als 1 MHz, erzeugbar ist. Die Laserdiode weist zu diesem Zweck eine wellenlängenselektive Vorrichtung, z.B. eine periodische Struktur (optisches Gitter) des aktiven Lasermediums, ein Gitter ausserhalb des aktiven Mediums jedoch auf demselben Chip verbaut oder eine Gitterstruktur in der externen Faser 9, auf, welche bewirkt, dass die emittierte Laserstrahlung longitudinal monomodig und damit mit einer spezifischen engen Linienbreite vorliegt (single-mode Laser). Ferner kann die geeignete Strahlcharakteristik mittels einer hoch-stabilen, externen Kavität oder mittels eines holografischen Gitters in Verbindung mit der Diode 20 generiert werden.

Vorteilhaft weist die Laserdiode 20 gemäss oben beschriebener Ausgestaltung eine Emissionswellenlänge von 633nm (sichtbarer roter Spektralbereich) auf, welche linear polarisiert ist, single-modig ist und eine Kohärenzlänge von mindestens 10m aufweist. Die Emissionsleistung der Strahlung liegt dabei über 0,5 mW mit einer grossen Wellenlängenstabilität über die gesamte Lebensdauer (<0,3 ppm) der Diode 20.

Insbesondere aufgrund der so erzeugbaren Strahlung mit der Wellenlänge von 633nm kann der Messstrahl gleichzeitig als Pointing-Strahl verwendet werden, wodurch auf eine zusätzliche Strahlquelle zur visuellen Markierung von Punkten verzichtet werden kann.

Die von der Laserdiode 20 erzeugte Strahlung wird mittels des Lichtleiters 9 in das Interferometer 10 eingekoppelt. Hierfür ist weiters ein Kollimator 8 zur Verbindung der Faser 9 mit dem Interferometer 10 vorgesehen. Der Aufbau des Interferometers 10 ist demjenigen der beschriebenen erfindungsgemässen Ausführungsform gemäss Figur 3 ähnlich, wobei der Referenzpfad 12 hier jedoch mittels eines Stahlteiler 17 auf den Detektor 16 und der Messpfad 18 vermittels des Stahlteilers 11 geführt wird. Zudem ist der akustooptische Modulator 13 zur Frequenzvariation und als optischer Isolator vorgesehen. Darüber hinaus weist der Lasertracker einen Absolutdistanzmesser 30 mit gattungsgemäss typischen optischen Komponenten (Strahlquelle, Detektor, Isolator, etc.) auf.

Der Lasertracker weist zwei getrennte Einheiten 71,72 auf. Die Kamera 50, der Absolutdistanzmesser 30 und das Interferometer 10 sind zusammen mit weiteren insbesondere strahlführenden Bauteilen an einer Strahllenkeinheit 71 angeordnet. Diese Strahllenkeinheit 71 kann je nach Ausführung des Lasertrackers unterschiedlich ausgebildet sein, z.B. als eine strukturell einteilige Anzieleinheit oder als Strahlführungseinheit (z.B. rotierbarer Spiegel) mit einer den Absolutdistanzmesser 30 und das Interferometer 10 aufweisenden Messeinheit. Ferner kann Strahllenkeinheit 71 unabhängig von einer Ausrichtung oder Orientierung einer Basiseinheit 72 bewegbar, insbesondere schwenkbar um zwei Achsen, ausgeführt sein. Durch eine derartige Trennung kann - wie in der gezeigten Ausführungsform realisiert - die als Interferometer-Strahlquelle ausgebildete Laserdiode 20 in der Basiseinheit 72 vorliegen, die erzeugte Strahlung mittels der optischen Faser 9 in die Strahllenkeinheit 71 eingekoppelt und die Ausrichtung der Strahllenkeinheit 71 bzw. der optischen Achsen 61,62 der Kamera 50 und der Distanzmesser 10,30 relativ zur Basis 72 verändert werden.

Insbesondere kann durch diese strukturelle Separierung ein in der Strahllenkeinheit 71 benötigter Platzbedarf für die erforderlichen Komponenten verkleinert werden, da die Laserdiode 20 und allfällige Versorgungs- und Steuerungskomponenten für diese aus der Strahllenkeinheit 71 in die Basis 72 ausgelagert werden können.

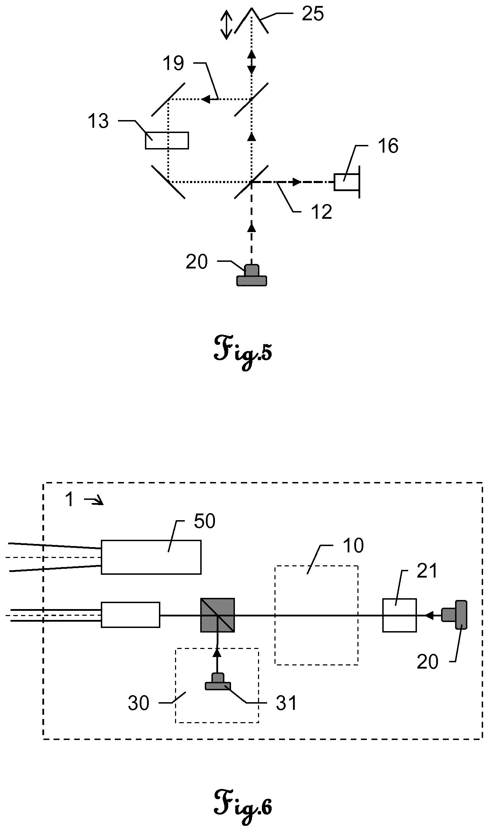

Figur 5 zeigt einen prinzipiellen erfindungsgemässen Aufbau einer Interferometeranordnung mit Laserdiode 20 für einen Lasertracker. Mittels der Laserdiode wird eine (longitudinal) einmodige Messstrahlung mit einer Kohärenzlänge von mindestens 10m, vorzugsweise 50m, erzeugt, welche mit Strahlteilern zum einen auf einem Referenzpfad 12 und zum anderen auf einem Rückpfad 19 geführt wird. Die Strahlung wird auf ein reflektierendes Ziel 25 gelenkt und dort reflektiert. Zudem ist ein akustooptischer Modulator 13 im Rückpfad 19 angeordnet. Das Ziel 25 stellt dabei ein bewegliches Ziel 25 dar, wobei eine Entfernungsänderung zum Interferometer mittels des Interferometer-Detektors 16 feststellbar und messbar ist. Auf dem Interferometer-Detektor 16 werden hierzu die Referenzstrahlung und die Messstrahlung überlagert, wodurch diese Strahlen interferieren und ein Auslesen von Messwerten erlauben.

Figur 6 zeigt eine weiter Ausführungsform einer erfindungsgemässen Messoptik 1 eines Lasertrackers mit einer Laserdiode 20 als Interferometer-Strahlquelle zur Erzeugung einer Messstrahlung für ein Interferometer 10 mit einer Wellenlängenstabilisierungseinheit 21. Zudem sind wiederum ein Absolutdistanzmesser 30 mit einer weiteren Lichtquelle 31, vorzugsweise ausgeführt als Laserdiode oder SLED, und eine Kamera 50 vorgesehen.

Mittels der Wellenlängenstabilisierungseinheit 21 wird eine Stabilisierung der Messstrahlung auf ein Wellenlängennormal, z.B. auf eine Absorptionslinie (z.B. unter Verwendung einer Jodzelle) von ca. 633nm, realisiert. Im Allgemeinen kann die Wellenlängenstabilisierungseinheit 21 zur Stabilisierung über eine Gaszelle verfügen. Insbesondere sind zur Stabilisierung unterschiedliche Stabilisierungsansätze heranziehbar, so z.B. Synchrondetektion ("synchroneous detection": Modulation der optischen Frequenz um eine zentrale Absorptionslinie), "side of line" - Methode oder Stabilisation mittels des Zeeman-Effekts bei konstanter optischer Frequenz (mit magnetischer Modulation). Die "side of line" - Methode basiert dabei auf einer Stabilisation mittels Absorption bei einem Absorptionswert, welcher der maximalen Steigung einer korrespondierenden Absorptionslinie einer Gaszelle entspricht (z.B. Stabilisation bei ca. 40% Absorption).

Für eine solche Stabilisation wird von der Laserdiode 20 Licht mit einen modehop-frei durchstimmbaren (tuneable) Wellenlängenbereich bereitgestellt, so dass auf die gewünschte Absorptionslinie wellenlängenmässig abgestimmt werden kann. Das erzeugte Laserlicht weist zudem eine grosse Kohärenzlänge (mindestens 10m, insbesondere 50m) auf.

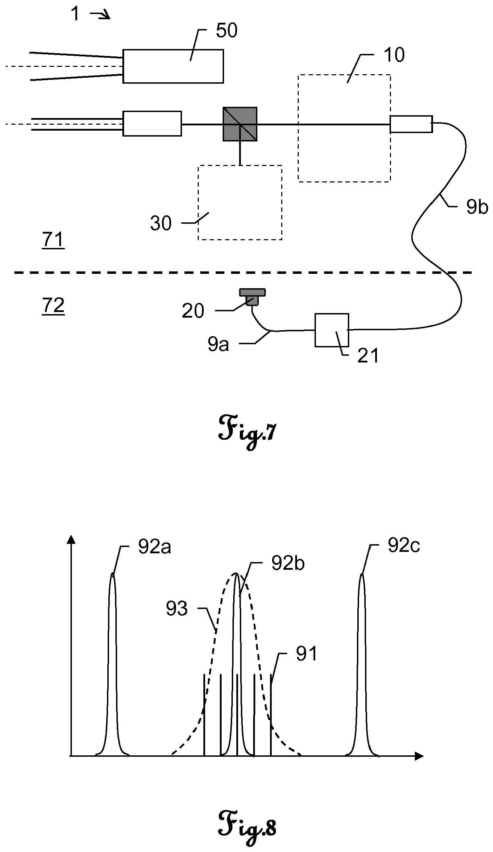

Figur 7 zeigt eine weitere Ausführungsform einer erfindungsgemässen Messoptik 1 eines Lasertrackers mit einer Laserdiode 20 zur Erzeugung einer Messstrahlung für ein Interferometer 10, einer Wellenlängenstabilisierungseinheit 21 und Lichtleitern 9a,9b zum Führen der Laserstrahlung. Die mit der Diode 20 erzeugte single-mode Laserstrahlung wird mittels der optischen Faser 9a zur Wellenlängenstabilisierungseinheit 21 geführt. Diese Stabilisierungseinheit 21 bewirkt ein weitgehendes Konstant-Halten der Wellenlänge der Laserstrahlung. Die damit stabilisierte Strahlung wird durch eine weitere optische Faser 9b von der Wellenlängenstabilisierungseinheit 21 hin zum Interferometer 10 geführt. Aufgrund der so generierten Messstrahlung mit grosser Kohärenzlänge und Wellenlängenstabilität können Messungen von Entfernungsänderungen mit dem Interferometer 10 hochpräzise durchgeführt werden.

Zusammen mit Distanzmessungen des Absolutdistanzmessers 30 sind mit einem derart ausgebildeten Lasertracker sehr genaue Entfernungsbestimmungen und Detektionen von Entfernungsänderungen zu einem Ziel verfügbar In Analogie zu einer Ausführungsform gemäss Figur 4 wird eine räumliche und insbesondere strukturelle Trennung der Laserdiode 20 und der Wellenlängenstabilisierungseinheit 21 von den Distanzmessmitteln 10,30 und der Kamera 50 des Lasertrackers durch Verbindung der beiden Einheiten 71,72 mittels der optischen Faser 9b erreicht.

Figur 8 zeigt eine schematische Darstellung zur Erzeugung der Messstrahlung mit einer in einem erfindungsgemässen Lasertracker vorgesehenen Laserdiode mit wellenlängenselektiver Komponente.

Eine Laserdiode weist typischerweise ein Gainmedium (Lasermedium) mit eine Bandbreite von einigen Nanometern und einen Laserresonator auf. Aufgrund der Resonatorlänge, die durch die räumliche Dimensionierung einer solchen Diode typischerweise in der Grössenordnung von maximal einigen Millimetern liegt, wird somit ein Abstand von mit der Diode erzeugbaren Resonatormoden 91 im Sub-Nanometer-Bereich definiert. Dies hat zur Folge, dass mehrere Moden 91 gleichzeitig lasen können, d.h. dass Laserstrahlung mit mehreren Moden 91 (Multimode) erzeugt wird.

Im Rahmen der vorliegenden Erfindung werden Laserdioden in Verbindung mit einer zusätzlichen wellenlängensensitiven Vorrichtung eingesetzt. Dadurch kann ein wellenlängenabhängiges optisches Feedback erzeugt werden, wodurch diese Vorrichtung wie ein zusätzlicher Resonator mit anderen Moden 92a-c wirkt.

Durch eine solche Anordnung wird erreicht, dass nur bei denjenigen Frequenzen "Lasing" möglich ist, d.h. Laserstrahlung erzeugt wird, bei welchen zum einen die laserbasierte Lichtverstärkung erfolgt (vgl. Gainprofil 93 einer derartigen Laserdiode) und eine Mode 91 des Laserresonators und eine Mode 92a-c des zusätzlichen optischen Feedbackdevices (wellenlängenselektive Vorrichtung) gleichzeitig (bei gleicher Frequenz) vorliegen. Dadurch wird eine einzige Mode 91 des Laserresonators selektiert. Gezeigt ist der Effekt einer wellenlängenselektiven Vorrichtung mit deutlich grösserer Resonatorlänge als die Resonatorlänge der Diode. Dadurch ergibt sich nur eine durch die Vorrichtung definierte Mode 92b innerhalb des Gainbereichs.

Denkbar wäre auch eine alternative, hier nicht dargestellt Lösung, wobei ein kürzerer externer Resonator eingesetz wird, so dass dessen Modenabstand vergleichbar jenem der Laserdiode ist. Mit der Bedingung, dass die Schärfe der damit definierten Moden gut genug ist und dass die Moden nicht bei beiden Resonatoren genau gleich sind, kann auch hier nur eine gemeinsame Mode im Gainbereich vorliegen und damit singlemode-Betrieb erreicht werden.

Es versteht sich, dass diese dargestellten Figuren nur mögliche Ausführungsbeispiele schematisch darstellen. Die verschiedenen Ansätze können erfindungsgemäss ebenso miteinander sowie mit Interferometrieverfahren zur Messung von Entfernungsänderungen, mit Verfahren zur Distanzbestimmung und mit gattungsgemässen Messgeräten, insbesondere Lasertrackern, des Stands der Technik kombiniert werden. Die erfindungsgemässen Aspekte können auch Anwendung finden in geodätischen Vermessungsgeräten - wie Totalstationen und Tachymeter.

## Patentansprüche

1. Lasertracker (70) zur fortlaufenden Verfolgung eines reflektierenden Ziels (25,81) und zur Entfernungsbestimmung zu dem Ziel (25,81) mit
• einer eine Stehachse definierenden Basis (72),
• einer Strahllenkeinheit (71) zur Emission einer Messstrahlung und zum Empfang von zumindest einem Teil der am Ziel (25,81) reflektierten Messstrahlung, wobei die Strahllenkeinheit (71) um die Stehachse und eine im Wesentlichen orthogonal zur Stehachse stehende Neigungsachse relativ zur Basis (72) motorisiert schwenkbar ist,
• einer als Interferometer (10) ausgebildeten Entfernungsmesseinheit (10) zur Bestimmung einer Entfernungsänderung zum Ziel (25,81) mittels Interferometrie,
• einer Interferometer-Laserstrahlquelle (20) zur Erzeugung der Messstrahlung (76) für das Interferometer (10) und
• einer Winkelmessfunktionalität zur Bestimmung einer Ausrichtung der Strahllenkeinheit (71) relativ zur Basis (72),
**dadurch gekennzeichnet, dass**
die Interferometer-Laserstrahlquelle (20) als Laserdiode (20) ausgebildet ist und die Laserdiode (20) eine derart angeordnete wellenlängenselektive Komponente aufweist, dass die Messstrahlung (76) longitudinal monomodig mit einer definierten mode-hop-frei durchstimmbaren Emissionswellenlänge mit einer Kohärenzlänge von mindestens 10m erzeugbar ist, insbesondere wobei die Kohärenzlänge von mindestens 10m mittels des Interferometers (10) bestimmbar ist, und wobei die Messstrahlung auf eine gewünschte Absorptionslinie einer Wellenlängenstabilisierungseinheit wellenlängenmässig abgestimmt werden kann,
wobei
• die Laserdiode eine erste Resonatoreinheit aufweist, die eine Anzahl von durch die Laserdiode erzeugbaren und gemeinsam entstehenden Lasermoden definiert, wobei durch jede Lasermode eine jeweils unterschiedliche Modenwellenlänge festgelegt ist und eine Diodenstrahlung mit den unterschiedlichen Modenwellenlängen erzeugbar ist,
• die wellenlängenselektive Komponente derart ausgebildet ist, dass diese als eine zweite Resonatoreinheit wirkt und durch ein Zusammenwirken der wellenlängenselektiven Komponente mit der Laserdiode aus der Anzahl der Lasermoden eine Hauptlasermode extrahierbar ist, und
• die Diodenstrahlung als nur die Hauptlasermode aufweisende longitudinal monomodige Messstrahlung (76) emittierbar ist, sodass die Emissionswellenlänge und die Kohärenzlänge der Messstrahlung (76) definiert sind.

2. Lasertracker (70) nach Anspruch 1,
**dadurch gekennzeichnet, dass** die Laserdiode (20) ausgebildet ist als
• Distributed Feedback Laser,
• Distributed Bragg Reflector Laser,
• Fiber Bragg Grating Laser,
• External Cavity Diode Laser,
• Diode Pumped Solid State Laser,
• Discrete Mode Laser oder
• Microchip Laser.

3. Lasertracker (70) nach einem der Ansprüche 1 oder 2,
**dadurch gekennzeichnet, dass**
die Emissionswellenlänge der Messstrahlung (76) zwischen 600nm und 700nm, insbesondere zwischen 630nm und 635nm, oder zwischen 850nm und 900nm, insbesondere zwischen 850nm und 855nm oder
zwischen 892nm und 896nm, liegt.

4. Lasertracker (70) nach einem der Ansprüche 1 bis 3,
**dadurch gekennzeichnet, dass**
der Lasertracker (70) eine Steuerungseinheit aufweist und die Laserdiode (20) derart ausgebildet ist, dass die Emissionswellenlänge der Messstrahlung (76) innerhalb eines bestimmten Emissionswellenlängenbereichs longitudinal monomodig variierbar ist, insbesondere wobei die Emissionswellenlänge durch eine Temperaturänderung der Laserdiode (20) und/oder eine Änderung eines an der Laserdiode (20) anliegenden elektrischen Stroms gesteuert durch die Steuerungseinheit variierbar ist.

5. Lasertracker (70) nach Anspruch 4,
**dadurch gekennzeichnet, dass**
vermittels der Steuerungseinheit die Laserdiode (20) derart ansteuerbar ist, dass eine Emissionsleistung der Messstrahlung (76) variierbar ist.

6. Lasertracker (70) nach einem der Ansprüche 1 bis 5,
**dadurch gekennzeichnet, dass**
der Lasertracker (70) eine Wellenlängenstabilisierungseinheit (21) zur Stabilisierung der von der Laserdiode (20) erzeugten Messstrahlung (76) aufweist, sodass die Emissionswellenlänge fortlaufend innerhalb eines definierten Wellenlängenbereichs vorliegt, insbesondere wobei die Wellenlängenstabilisierungseinheit (21) als Absorptionszelle ausgebildet ist, insbesondere wobei der Lasertracker (70) eine optische Verbindungsfaser (9a) zur Verbindung der Wellenlängenstabilisierungseinheit (21) mit der Interferometer-Laserstrahlquelle (20) aufweist.

7. Lasertracker (70) nach einem der Ansprüche 1 bis 6,
**dadurch gekennzeichnet, dass**
der Lasertracker (70) zumindest eine optische Faser (9,9a,9b) aufweist, wobei die Messstrahlung (76) vermittels der optischen Faser (9,9a,9b) führbar ist, insbesondere zum Interferometer (10) führbar ist, insbesondere wobei die durch die Laserdiode (20) erzeugbare Messstrahlung (76) in die optische Faser (9,9a,9b) eingekoppelt wird.

8. Lasertracker (70) nach Anspruch 7,
**dadurch gekennzeichnet, dass**
die Messstrahlung (76) mittels der optischen Faser (9,9a,9b) in die Strahllenkeinheit (71) einkoppelbar ist.

9. Lasertracker (70) nach einem der Ansprüche 1 bis 8,
**dadurch gekennzeichnet, dass**
der Lasertracker (70) eine um die Stehachse relativ zur Basis (72) schwenkbare Stütze aufweist und die Strahllenkeinheit (71) als um die Neigungsachse relativ zur Stütze schwenkbare Anzieleinheit ausgebildet ist, insbesondere wobei die Laserdiode (20) in der Anzieleinheit angeordnet ist.

10. Lasertracker (70) nach einem der Ansprüche 1 bis 9,
**dadurch gekennzeichnet, dass**
der Lasertracker (70) zusätzlich eine Absolutdistanzmesseinheit (30) zur Bestimmung einer Distanz zum Ziel (25,81) aufweist, insbesondere nach dem Prinzip der Laufzeitmessung und/oder nach dem Phasenmessprinzip und/oder nach dem Fizeau-Prinzip.

11. Lasertracker (70) nach Anspruch 10,
**dadurch gekennzeichnet, dass**
eine Präzisionsentfernung zum Ziel (25,81) in Abhängigkeit der mittels der Absolutdistanzmesseinheit (30) bestimmten Distanz und der mittels der Entfernungsmesseinheit (10) bestimmten Entfernungsänderung bestimmbar ist.

12. Verwendung einer Laserdiode (20), die zur Erzeugung einer longitudinal monomodigen Messstrahlung (76) mit
• einer definierten mode-hop-frei durchstimmbaren Emissionswellenlänge und
• einer Kohärenzlänge von mindestens 10m ausgebildet ist,
in einer als Interferometer (10) ausgebildeten Entfernungsmesseinheit (10) eines Lasertrackers (70) zur Bestimmung einer Entfernungsänderung zu einem Ziel (25,81) durch Interferometrie mittels der durch die Laserdiode (20) erzeugbaren Messstrahlung (76), wobei die Messstrahlung auf eine gewünschte Absorptionslinie einer Wellenlängenstabilisierungseinheit wellenlängenmässig abgestimmt werden kann,
wobei
• die Laserdiode eine erste Resonatoreinheit aufweist, die eine Anzahl von durch die Laserdiode erzeugbaren und gemeinsam entstehenden Lasermoden definiert, wobei durch jede Lasermode eine jeweils unterschiedliche Modenwellenlänge festgelegt ist und eine Diodenstrahlung mit den unterschiedlichen Modenwellenlängen erzeugbar ist,
• die wellenlängenselektive Komponente derart ausgebildet ist, dass diese als eine zweite Resonatoreinheit wirkt und durch ein Zusammenwirken der wellenlängenselektiven Komponente mit der Laserdiode aus der Anzahl der Lasermoden eine Hauptlasermode extrahierbar ist, und
• die Diodenstrahlung als nur die Hauptlasermode aufweisende longitudinal monomodige Messstrahlung (76) emittierbar ist, sodass die Emissionswellenlänge und die Kohärenzlänge der Messstrahlung (76) definiert sind.

13. Verfahren zum Bestimmen einer Entfernungsänderung zu einem Ziel (25,81) mittels Interferometrie mit einem Lasertracker (70) mit
• einer eine Stehachse definierenden Basis (72),
• einer Strahllenkeinheit (71) zum Emittieren einer Messstrahlung (76) und zum Empfangen von zumindest einem Teil der am Ziel (25,81) reflektierten Messstrahlung, wobei die Strahllenkeinheit (71) um die Stehachse und eine im Wesentlichen orthogonal zur Stehachse stehende Neigungsachse relativ zur Basis (72) motorisiert schwenkbar ist,
• einer als Interferometer (10) ausgebildeten Entfernungsmesseinheit (10) zum Bestimmen einer Entfernungsänderung zum Ziel (25,81) mittels Interferometrie und
• einer Interferometer-Laserstrahlquelle (20) zum Erzeugen der Messstrahlung (76) für das Interferometer (10),
sowie mit
• einem Emittieren der Messstrahlung (76),
• einem Empfangen des zumindest einen Teils der am Ziel (25,81) reflektierten Messstrahlung und
• dem Bestimmen der relativen Entfernung,
**dadurch gekennzeichnet, dass**
die Interferometer-Laserstrahlquelle (20) als Laserdiode (10) ausgebildet ist und die Laserdiode (20) eine derart angeordnete wellenlängenselektive Komponente aufweist, dass die Messstrahlung (76) longitudinal monomodig mit einer definierten mode-hop-frei durchstimmbaren Emissionswellenlänge mit einer Kohärenzlänge von mindestens 10m erzeugt wird, wobei die Messstrahlung auf eine gewünschte Absorptionslinie einer Wellenlängenstabilisierungseinheit wellenlängenmässig abgestimmt wird,
wobei
• die Laserdiode eine erste Resonatoreinheit aufweist, die eine Anzahl von durch die Laserdiode erzeugbaren und gemeinsam entstehenden Lasermoden definiert, wobei durch jede Lasermode eine jeweils unterschiedliche Modenwellenlänge festgelegt ist und eine Diodenstrahlung mit den unterschiedlichen Modenwellenlängen erzeugt wird,
• die wellenlängenselektive Komponente derart ausgebildet ist, dass diese als eine zweite Resonatoreinheit wirkt und durch ein Zusammenwirken der wellenlängenselektiven Komponente mit der Laserdiode aus der Anzahl der Lasermoden eine Hauptlasermode extrahiert wird, und
• die Diodenstrahlung als nur die Hauptlasermode aufweisende longitudinal monomodige Messstrahlung (76) emittiert wird, sodass die Emissionswellenlänge und die Kohärenzlänge der Messstrahlung (76) definiert sind.

14. Verfahren nach Anspruch 13,
**dadurch gekennzeichnet, dass**
ein Stabilisieren der von der Laserdiode (20) erzeugten Messstrahlung (76) derart erfolgt, dass die Emissionswellenlänge fortlaufend innerhalb eines definierten Wellenlängenbereichs vorliegt.

## Claims

1. A laser tracker (70) for continuously tracking a reflective target (25, 81) and for determining distance with respect to the target (25, 81) comprising
• a base (72) defining a vertical axis,
• a beam directing unit (71) for emitting a measurement radiation and for receiving at least one part of the measurement radiation reflected at the target (25, 81), wherein the beam directing unit (71) is pivotable in motorized fashion about the vertical axis and an inclination axis, which is substantially orthogonal with respect to the vertical axis, relative to the base (72),
• a distance measuring unit (10) embodied as an interferometer (10) and serving for determining a change in distance with respect to the target (25, 81) by means of interferometry,
• an interferometer laser beam source (20) for generating the measurement radiation (76) for the interferometer (10), and
• an angle measuring functionality for determining an orientation of the beam directing unit (71) relative to the base (72),
**characterized in that**
the interferometer laser beam source (20) is embodied as a laser diode (20) and the laser diode (20) has a wavelength-selective component arranged in such a way that the measurement radiation (76) can be generated in longitudinally monomode fashion with a defined emission wavelength, which is tunable in a mode-hop-free manner, and has a coherence length of at least 10 m, in particular wherein the coherence length of at least 10 m can be determined by means of the interferometer (10), and wherein the measurement radiation can be tuned, in terms of wavelength, to a desired absorption line of a wavelength stabilization unit, wherein
• the laser diode has a first resonator unit, which defines a number of laser modes which can be generated by the laser diode and which arise jointly, wherein a different mode wavelength is defined by means of each laser mode and it is possible to generate a diode radiation with the different mode wavelengths,
• the wavelength-selective component is embodied in such a way that it acts as a second resonator unit and a principal laser mode can be extracted from the number of laser modes by means of an interaction of the wavelength-selective component with the laser diode, and
• the diode radiation can be emitted as longitudinally monomode measurement radiation (76) having only the principal laser mode, such that the emission wavelength and the coherence length of the measurement radiation (76) are defined.

2. The laser tracker (70) as claimed in claim 1,
**characterized in that**
the laser diode (20) is embodied as
• a distributed feedback laser,
• a distributed Bragg reflector laser,
• a fiber Bragg grating laser,
• an external cavity diode laser,
• a diode pumped solid state laser,
• a discrete mode laser or
• a microchip laser.

3. The laser tracker (70) as claimed in one of claims 1 or 2,
**characterized in that**
the emission wavelength of the measurement radiation (76) is between 600 nm and 700 nm, in particular between 630 nm and 635 nm, or between 850 nm and 900 nm, in particular between 850 nm and 855 nm or between 892 nm and 896 nm.

4. The laser tracker (70) as claimed in any one of claims 1 to 3,
**characterized in that**
the laser tracker (70) has a control unit, and the laser diode (20) is embodied in such a way that the emission wavelength of the measurement radiation (76) is variable in longitudinally monomode fashion within a specific emission wavelength range, in particular wherein the emission wavelength is variable in a manner controlled by the control unit as a result of a change in the temperature of the laser diode (20) and/or a change in an electric current present at the laser diode (20).

5. The laser tracker (70) as claimed in claim 4,
**characterized in that**
the laser diode (20) can be driven by means of the control unit in such a way that an emission power of the measurement radiation (76) is variable.

6. The laser tracker (70) as claimed in any one of claims 1 to 5,
**characterized in that**
the laser tracker (70) has a wavelength stabilization unit (21) for stabilizing the measurement radiation (76) generated by the laser diode (20), such that the emission wavelength is present continuously within a defined wavelength range, in particular wherein the wavelength stabilization unit (21) is embodied as an absorption cell, in particular wherein the laser tracker (70) has an optical connecting fiber (9a) for connecting the wavelength stabilization unit (21) to the interferometer laser beam source (20).

7. The laser tracker (70) as claimed in any one of claims 1 to 6,
**characterized in that**
the laser tracker (70) has at least one optical fiber (9, 9a, 9b), wherein the measurement radiation (76) can be guided by means of the optical fiber (9, 9a, 9b), in particular can be guided to the interferometer (10), in particular wherein the measurement radiation (76) that can be generated by the laser diode (20) is coupled into the optical fiber (9, 9a, 9b).

8. The laser tracker (70) as claimed in claim 7,
**characterized in that**
the measurement radiation (76) can be coupled into the beam directing unit (71) by means of the optical fiber (9, 9a, 9b).

9. The laser tracker (70) as claimed in any one of claims 1 to 8,
**characterized in that**
the laser tracker (70) has a support pivotable about the vertical axis relative to the base (72), and the beam directing unit (71) is embodied as a targeting unit pivotable about the inclination axis relative to the support, in particular wherein the laser diode (20) is arranged in the targeting unit.

10. The laser tracker (70) as claimed in any one of claims 1 to 9,
**characterized in that**
the laser tracker (70) additionally has an absolute distance measuring unit (30) for determining a distance with respect to the target (25, 81), in particular according to the principle of time-of-flight measurement and/or according to the phase measurement principle and/or according to the Fizeau principle.

11. The laser tracker (70) as claimed in claim 10
**characterized in that**
a precision distance with respect to the target (25, 81) can be determined in a manner dependent on the distance determined by means of the absolute distance measuring unit (30) and the change in distance determined by means of the distance measuring unit (10).

12. The use of a laser diode (20) designed for generating a longitudinally monomode measurement radiation (76) having
• a defined emission wavelength which is tunable in a mode-hop-free manner and
• a coherence length of at least 10 m,
in a distance measuring unit (10) - embodied as an interferometer (10) - of a laser tracker (70) for determining a change in distance with respect to a target (25, 81) by interferometry by means of the measurement radiation (76) that can be generated by the laser diode (20), wherein the measurement radiation can be tuned, in terms of wavelength, to a desired absorption line of a wavelength stabilization unit, wherein
• the laser diode has a first resonator unit, which defines a number of laser modes which can be generated by the laser diode and which arise jointly, wherein a different mode wavelength is defined by means of each laser mode and it is possible to generate a diode radiation with the different mode wavelengths,
• the wavelength-selective component is embodied in such a way that it acts as a second resonator unit and a principal laser mode can be extracted from the number of laser modes by means of an interaction of the wavelength-selective component with the laser diode, and
• the diode radiation can be emitted as longitudinally monomode measurement radiation (76) having only the principal laser mode, such that the emission wavelength and the coherence length of the measurement radiation (76) are defined.

13. A method for determining a change in distance with respect to a target (25, 81) by means of interferometry with a laser tracker (70) comprising
• a base (72) defining a vertical axis,
• a beam directing unit (71) for emitting a measurement radiation (76) and for receiving at least one part of the measurement radiation reflected at the target (25, 81), wherein the beam directing unit (71) is pivotable in motorized fashion about the vertical axis and an inclination axis, which is substantially orthogonal with respect to the vertical axis, relative to the base (72),
• a distance measuring unit (10) embodied as an interferometer (10) and serving for determining a change in distance with respect to the target (25, 81) by means of interferometry, and
• an interferometer laser beam source (20) for generating the measurement radiation (76) for the interferometer (10),
and comprising
• emitting the measurement radiation (76),
• receiving the at least one part of the measurement radiation reflected at the target (25, 81), and
• determining the relative distance,
**characterized in that**
the interferometer laser beam source (20) is embodied as a laser diode (20) and the laser diode (20) has a wavelength-selective component arranged in such a way that the measurement radiation (76) is generated in longitudinally monomode fashion with a defined emission wavelength, which is tunable in a mode-hop-free manner, and has a coherence length of at least 10 m, wherein the measurement radiation is tuned, in terms of wavelength, to a desired absorption line of a wavelength stabilization unit, wherein
• the laser diode has a first resonator unit, which defines a number of laser modes which can be generated by the laser diode and which arise jointly, wherein a different mode wavelength is defined by means of each laser mode and a diode radiation with the different mode wavelengths is generated,
• the wavelength-selective component is embodied in such a way that it acts as a second resonator unit and a principal laser mode is extracted from the number of laser modes by means of an interaction of the wavelength-selective component with the laser diode, and
• the diode radiation is emitted as longitudinally monomode measurement radiation (76) having only the principal laser mode, such that the emission wavelength and the coherence length of the measurement radiation (76) are defined.

14. The method as claimed in claim 13,
**characterized in that**
the measurement radiation (76) generated by the laser diode (20) is stabilized in such a way that the emission wavelength is present continuously within a defined wavelength range.

## Revendications

1. Laser de relevé (70) destiné à poursuivre en continu une cible (25, 81) réfléchissante et à déterminer la distance par rapport à ladite cible (25, 81), comportant
• une base (72) définissant un axe vertical,
• une unité de guidage de faisceau (71) destinée à émettre un rayonnement de mesure et à recevoir au moins une partie du rayonnement de mesure réfléchi par la cible (25, 81), ladite unité de guidage de faisceau (71) pouvant pivoter de manière motorisée par rapport à la base (72) autour de l'axe vertical et autour d'un axe d'inclinaison essentiellement orthogonal à l'axe vertical,
• une unité de mesure de distance (10) conçue sous la forme d'un interféromètre (10) et destinée à déterminer par interférométrie une variation de distance par rapport à la cible (25, 81),
• une source de rayonnement laser d'interféromètre (20) destinée à produire le rayonnement de mesure (76) pour l'interféromètre (10) et
• une fonctionnalité de mesure d'angle destinée à déterminer une orientation de l'unité de guidage de faisceau (71) par rapport à la base (72),
**caractérisé en ce que**
la source de rayonnement laser d'interféromètre (20) est conçue sous la forme d'une diode laser (20) et ladite diode laser (20) présente un composant sélectif en longueurs d'onde agencé de sorte que le rayonnement de mesure (76) peut être produit de façon monomode longitudinale avec une longueur d'onde d'émission définie et accordable sans saut de mode, possédant une longueur de cohérence d'au moins 10 m, ladite longueur de cohérence d'au moins 10 m pouvant notamment être déterminée au moyen de l'interféromètre (10), et le rayonnement de mesure pouvant être accordé en longueur d'onde sur une raie d'absorption souhaitée d'une unité de stabilisation des longueurs d'onde,
et dans lequel
• la diode laser présente une première unité de résonateur qui définit un certain nombre de modes laser pouvant être produits par ladite diode laser et formés conjointement, dans laquelle une longueur d'onde de mode différente est fixée par chaque mode laser et un rayonnement de diode peut être généré avec les différentes longueurs d'onde de mode,
• le composant sélectif en longueurs d'onde est conçu de manière à agir comme une deuxième unité de résonateur et à permettre l'extraction d'un mode laser principal à partir dudit certain nombre de modes laser, par l'effet conjugué du composant sélectif en longueurs d'onde et de la diode laser, et
• le rayonnement de diode peut être émis sous la forme d'un rayonnement de mesure (76) monomode longitudinal présentant uniquement le mode laser principal, de manière à définir la longueur d'onde d'émission et la longueur de cohérence du rayonnement de mesure (76).

2. Laser de relevé (70) selon la revendication 1,
**caractérisé en ce que**
la diode laser (20) est conçue sous la forme
• d'un laser à rétroaction répartie,
• d'un laser à réflecteur de Bragg distribué,
• d'un laser à réseau de Bragg dans la fibre,
• d'une diode laser à cavité externe,
• d'un laser à solide pompé par diode,
• d'un laser à mode discret ou
• d'un laser à microcircuit.

3. Laser de relevé (70) selon l'une des revendications 1 et 2,
**caractérisé en ce que**
la longueur d'onde d'émission du rayonnement de mesure (76) se situe entre 600 nm et 700 nm, notamment entre 630 nm et 635 nm, ou entre 850 nm et 900 nm, notamment entre 850 nm et 855 nm ou entre 892 nm et 896 nm.

4. Laser de relevé (70) selon l'une des revendications 1 à 3,
**caractérisé en ce que**
le laser de relevé (70) présente une unité de commande et la diode laser (20) est conçue de sorte que la longueur d'onde d'émission du rayonnement de mesure (76) peut varier de façon monomode longitudinale dans un domaine défini de longueur d'onde d'émission, la longueur d'onde d'émission pouvant notamment varier en conséquence d'une modification de la température de la diode laser (20) et/ou d'une modification d'un courant électrique appliqué à la diode laser (20) commandées par l'unité de commande.

5. Laser de relevé (70) selon la revendication 4,
**caractérisé en ce que**
l'unité de commande permet de commander la diode laser (20) de manière à pouvoir faire varier la puissance d'émission du rayonnement de mesure (76).

6. Laser de relevé (70) selon l'une des revendications 1 à 5,
**caractérisé en ce que**
le laser de relevé (70) présente une unité de stabilisation des longueurs d'onde (21) destinée à stabiliser le rayonnement de mesure (76) produit par la diode laser (20), afin que la longueur d'onde d'émission reste constamment dans un domaine défini de longueur d'onde, l'unité de stabilisation des longueurs d'onde (21) étant notamment conçue sous la forme d'une cellule d'absorption, le laser de relevé (70) présentant notamment une fibre optique de liaison (9a) destinée à relier l'unité de stabilisation des longueurs d'onde (21) et la source de rayonnement laser d'interféromètre (20).

7. Laser de relevé (70) selon l'une des revendications 1 à 6,
**caractérisé en ce que**
le laser de relevé (70) présente au moins une fibre optique (9, 9a, 9b), le rayonnement de mesure (76) pouvant être guidé par ladite fibre optique (9, 9a, 9b), notamment jusqu'à l'interféromètre (10), le rayonnement de mesure (76) qui peut être produit par la diode laser (20) étant notamment injecté dans la fibre optique (9, 9a, 9b).

8. Laser de relevé (70) selon la revendication 7,
**caractérisé en ce que**
le rayonnement de mesure (76) peut être injecté dans l'unité de guidage de faisceau (71) au moyen de la fibre optique (9, 9a, 9b).

9. Laser de relevé (70) selon l'une des revendications 1 à 8,
**caractérisé en ce que**
le laser de relevé (70) présente un support pouvant pivoter par rapport à la base (72) autour de l'axe vertical et l'unité de guidage de faisceau (71) est conçue sous la forme d'une unité de visée pouvant pivoter par rapport au support autour de l'axe d'inclinaison, la diode laser (20) étant notamment agencée dans l'unité de visée.

10. Laser de relevé (70) selon l'une des revendications 1 à 9,
**caractérisé en ce que**
le laser de relevé (70) présente en outre une unité de mesure de distance absolue (30) destinée à déterminer une distance par rapport à la cible (25, 81), notamment selon le principe de mesure du temps de propagation et/ou selon le principe de mesure de phase et/ou selon le principe de Fizeau.

11. Laser de relevé (70) selon la revendication 10,
**caractérisé en ce que**
il est possible de déterminer une distance de précision par rapport à la cible (25, 81) en fonction de la distance déterminée au moyen de l'unité de mesure de distance absolue (30) et de la variation de distance déterminée au moyen de l'unité de mesure de distance (10).

12. Utilisation d'une diode laser (20) conçue pour produire un rayonnement de mesure (76) monomode longitudinal avec
• une longueur d'onde d'émission définie et accordable sans saut de mode, et
• une longueur de cohérence d'au moins 10 m,
dans une unité de mesure de distance (10) d'un laser de relevé (70) conçue sous la forme d'un interféromètre (10) et destinée à déterminer par interférométrie une variation de distance par rapport à une cible (25, 81) au moyen du rayonnement de mesure (76) pouvant être produit par la diode laser (20), le rayonnement de mesure pouvant être accordé en longueur d'onde sur une raie d'absorption souhaitée d'une unité de stabilisation des longueurs d'onde,
et dans laquelle
• la diode laser présente une première unité de résonateur qui définit un certain nombre de modes laser pouvant être produits par ladite diode laser et formés conjointement, dans laquelle une longueur d'onde de mode différente est fixée par chaque mode laser et un rayonnement de diode peut être généré avec les différentes longueurs d'onde de mode,
• le composant sélectif en longueurs d'onde est conçu de manière à agir comme une deuxième unité de résonateur et à permettre l'extraction d'un mode laser principal à partir dudit certain nombre de modes laser, par l'effet conjugué du composant sélectif en longueurs d'onde et de la diode laser, et
• le rayonnement de diode peut être émis sous la forme d'un rayonnement de mesure (76) monomode longitudinal présentant uniquement le mode laser principal, de manière à définir la longueur d'onde d'émission et la longueur de cohérence du rayonnement de mesure (76).

13. Procédé de détermination par interférométrie d'une variation de distance par rapport à une cible (25, 81) au moyen d'un laser de relevé (70) comportant
• une base (72) définissant un axe vertical,
• une unité de guidage de faisceau (71) destinée à émettre un rayonnement de mesure (76) et à recevoir au moins une partie du rayonnement de mesure réfléchi par la cible (25, 81), ladite unité de guidage de faisceau (71) pouvant pivoter de manière motorisée par rapport à la base (72) autour de l'axe vertical et autour d'un axe d'inclinaison essentiellement orthogonal à l'axe vertical,
• une unité de mesure de distance (10) conçue sous la forme d'un interféromètre (10) et destinée à déterminer par interférométrie une variation de distance par rapport à la cible (25, 81), et
• une source de rayonnement laser d'interféromètre (20) destinée à produire le rayonnement de mesure (76) pour l'interféromètre (10),
et comprenant
• une émission du rayonnement de mesure (76),
• une réception de l'au moins une partie du rayonnement de mesure réfléchi par la cible (25, 81) et
• la détermination de la distance relative,
**caractérisé en ce que**
la source de rayonnement laser d'interféromètre (20) est conçue sous la forme d'une diode laser (20) et ladite diode laser (20) présente un composant sélectif en longueurs d'onde agencé de sorte que le rayonnement de mesure (76) est produit de façon monomode longitudinale avec une longueur d'onde d'émission définie et accordable sans saut de mode, possédant une longueur de cohérence d'au moins 10 m, le rayonnement de mesure étant accordé en longueur d'onde sur une raie d'absorption souhaitée d'une unité de stabilisation des longueurs d'onde,
et dans lequel
• la diode laser présente une première unité de résonateur qui définit un certain nombre de modes laser pouvant être produits par ladite diode laser et formés conjointement, dans laquelle une longueur d'onde de mode différente est fixée par chaque mode laser et un rayonnement de diode est généré avec les différentes longueurs d'onde de mode,
• le composant sélectif en longueurs d'onde est conçu de manière à agir comme une deuxième unité de résonateur et à extraire un mode laser principal à partir dudit certain nombre de modes laser, par l'effet conjugué du composant sélectif en longueurs d'onde et de la diode laser, et
• le rayonnement de diode est émis sous la forme d'un rayonnement de mesure (76) monomode longitudinal présentant uniquement le mode laser principal, de manière à définir la longueur d'onde d'émission et la longueur de cohérence du rayonnement de mesure (76).

14. Procédé selon la revendication 13,
**caractérisé en ce que**
il se produit une stabilisation du rayonnement de mesure (76) produit par la diode laser (20) de sorte que la longueur d'onde d'émission reste constamment dans un domaine défini de longueur d'onde.
